# EUROPÄISCHE PATENTSCHRIFT

(11) **EP 2 910 454 B1**
(45) Veröffentlichungstag und Bekanntmachung des Hinweises auf die Patenterteilung: **17.08.2016**
(21) Anmeldenummer: 14155903.9
(22) Anmeldetag: 20.02.2014
(51) Int. Cl.: B62D 21/11, F16B 5/02

(54) **Fahrwerksbauteil mit Exzenterscheibenanschlag**
Undercarriage component with eccentric disc stop
Composant de châssis avec butée de disque d'excentrique

(43) Veröffentlichungstag der Anmeldung: 26.08.2015
(73) Patentinhaber: Autotech Engineering Deutschland GmbH, 33647 Bielefeld (DE)
(72) Erfinder: Klaassen, Denis, 49214 Bad Rothenfelde (DE); Krolo, Mario, 33803 Steinhagen (DE); Montejo Olivares, David, 48940 Leioa (ES)
(74) Vertreter: Cohausz & Florack

(56) Entgegenhaltungen:
- WO-A1-2013/110528
- DE-A1-102012 011 797
- US-A1- 2013 193 660

## Beschreibung

Die Erfindung betrifft ein Fahrwerksbauteil mit einer aus formbarem Grundmaterial, vorzugsweise Stahlblech, hergestellten Halterung, die mindestens ein Langloch zur Aufnahme eines Verbindungsbolzens zur Anbindung eines Lenkerarms und mindestens einen Anschlag für eine mit dem Verbindungsbolzen drehstarr verbundene oder drehstarr verbindbare Exzenterscheibe aufweist.

Derartige Fahrwerksbauteile, wie z.B. Hinterachsträger, sind an den Halterungen zur Anbindung von Lenkerarmen, insbesondere wie z.B. Federlenkern und Spurstangen, mit Mitteln zur Spur- und Sturzeinstellung der Fahrzeugräder versehen. Diese Mittel umfassen üblicherweise eine Exzenterscheibe, die mit dem der Anbindung des Lenkerarms dienenden Verbindungsbolzen drehstarr verbunden ist, wobei der Exzenterscheibe ein Anschlag zugeordnet ist, an dem sie beim Verstellen des Verbindungsbolzens zur Spur- und Sturzeinstellung abrollt oder gleitet.

Im Stand der Technik ist der Anschlag für die Exzenterscheibe durch mindestens ein aufgeschweißtes Zusatzelement, beispielsweise ein U-förmiges Blechteil, oder durch geschlitzte Durchstellungen realisiert. Diese bekannten Lösungen sind jedoch nicht zufriedenstellend. Denn bei den geschlitzten Durchstellungen besteht die Gefahr einer ungewollten Rissbildung bzw. Rissausbreitung im Grundmaterial des Fahrwerkbauteils. Ferner ist der Aufwand zur Einhaltung der maximal zulässigen Toleranzen bezüglich der Form und der Abmessungen der geschlitzten Durchstellungen relativ hoch. Zudem kann es bei der Montage der Verbindungsbolzen, nämlich beim Anziehen der Schraubverbindung zu einem Eindrücken der geschlitzten Durchstellungen kommen, so dass die Anschlagfunktion verloren geht.

Die Realisierung des Exzenteranschlages durch Aufschweißen eines Zusatzelements ist mit zusätzlichen Materialkosten und erheblichen Prozesskosten durch den zusätzlichen Fertigungsschritt für das Aufschweißen verbunden. Ferner besteht mitunter die Gefahr, dass sich das Zusatzelement löst, wenn die Schweißverbindung mangelhaft ausgeführt wurde und/oder durch Korrosion beansprucht wird.

Weiterhin bekannt ist die WO2013/110528 A1, die ein Fahrwerksbauteil entsprechend des ersten Teils des unabhängigen Anspruchs 1 offenbart.

Davon ausgehend lag der Erfindung die Aufgabe zugrunde, ein Fahrwerksbauteil der eingangs genannten Art zu schaffen, dessen Exzenteranschlag sich ohne die Gefahr einer Rissbildung prozesssicher und kostengünstig herstellen lässt.

Gelöst wird diese Aufgabe durch ein Fahrwerksbauteil mit den Merkmalen des Anspruchs 1. Bevorzugte und vorteilhafte Ausgestaltungen des erfindungsgemäßen Fahrwerksbauteils sind in den Unteransprüchen angegeben.

Das erfindungsgemäße Fahrwerksbauteil, das eine aus formbarem Grundmaterial, vorzugsweise Stahlblech, hergestellte Halterung umfasst, die mindestens ein Langloch zur Aufnahme eines Verbindungsbolzens zur Anbindung eines Lenkerarms und mindestens einen Anschlag für eine mit dem Verbindungsbolzen drehstarr verbundene oder drehstarr verbindbare Exzenterscheibe aufweist, ist dadurch gekennzeichnet, dass in das Grundmaterial eine Vertiefung eingeformt ist, die einen umlaufenden Randbereich und einen von dem Randbereich eingefassten Boden definiert, wobei der Boden das Langloch aufweist und der Randbereich zwei längliche, parallel zueinander verlaufende Flächen aufweist, die als Anschlag für die Exzenterscheibe dienen.

Die Vertiefung lässt sich mit relativ geringem Umformgrad des Grundmaterials herstellen. Aufgrund des geringen Umformgrades kann eine Rissbildung sicher vermieden werden. Die Vertiefung lässt sich auch in hochfeste Stahlbleche prozesssicher einformen, insbesondere einprägen. Die maximal zulässigen Toleranzen lassen sich wegen des Einformens nur einer einzelnen Vertiefung sicher einhalten. Das Formen (Prägen) der Vertiefung und das anschließende Einbringen des Langlochs erfolgen vorzugsweise konzentrisch. Insbesondere ist es möglich, das Einbringen des Langlochs mittels eines im Umformwerkzeug integrierten Stanzwerkzeugs auszuführen, so dass das Formen der Vertiefung und das Einbringen des Langlochs quasi in einem Fertigungsschritt erfolgen. Insbesondere erfordert die erfindungsgemäße Lösung kein am Grundmaterial aufzuschweißendes Zusatzelement, da der erfindungsgemäße Exzenteranschlag aus dem Grundmaterial geformt wird. Im Vergleich zu der herkömmlichen Lösung, bei der Zusatzelemente als Anschlag aufgeschweißt werden, fallen diese zusätzlichen Materialkosten bei der erfindungsgemäßen Lösung nicht an.

Eine bevorzugte Ausgestaltung der erfindungsgemäßen Lösung ist dadurch gekennzeichnet, dass jede der beiden länglichen, parallel zueinander verlaufenden Flächen der Vertiefung mit deren Boden einen Winkel im Bereich von 90° bis 120°, vorzugsweise im Bereich von 90° bis 100° einschließt. Vorzugsweise stehen beide länglichen, parallel zueinander verlaufenden Flächen jeweils im Wesentlichen senkrecht auf dem Boden der Vertiefung. Als Exzenterscheibe kann somit eine Exzenterscheibe mit zylindrischer, vorzugsweise kreiszylindrischer Umfangskante verwendet werden. Eine solche Exzenterscheibe lässt relativ einfach herstellen und ist daher kostengünstig erhältlich.

Vorzugsweise erstreckt sich jede der beiden länglichen, parallel zueinander verlaufenden Flächen (Anschlagflächen) senkrecht zum Boden (oder in z-Richtung) betrachtet über mindestens 10%, vorzugsweise mindestens 20%, besonders bevorzugt mindestens 25% der Tiefe der Vertiefung.

Eine weitere bevorzugte Ausgestaltung der erfindungsgemäßen Lösung ist dadurch gekennzeichnet, dass die größte Tiefe der Vertiefung weniger als das 3,0-fache, vorzugsweise weniger als das 2,8-fache der Dicke des Grundmaterials beträgt. Diese Ausgestaltung trägt zu einem sehr geringen Umformgrad des Grundmaterials bei und erhöht somit die Sicherheit gegen Rissbildung. Alternativ oder zusätzlich wird die Tiefe der Vertiefung des erfindungsgemäßen Fahrwerkbauteils in Abhängigkeit der Exzenterscheibendicke bemessen, so dass die Tiefe der Vertiefung dann beispielsweise das 0,5-fache bis 1,2-fache der Dicke der Exzenterscheibe beträgt.

Nach einer weiteren bevorzugten Ausgestaltung der Erfindung weist jede der beiden länglichen, parallel zueinander verlaufenden Flächen eine Länge auf, die mindestens das 0,8-fache, vorzugsweise mindestens das 1,1-fache der Länge des Langlochs beträgt. Hierdurch kann bei geringem Umformgrad des Grundmaterials ein ausreichend großer Verstellbereich der Lenkeranbindung zur Spur- und Sturzeinstellung erzielt werden.

Hinsichtlich geringer Abmessungen der Vertiefung sowie eines geringen Umformgrades des Grundmaterials ist es ferner vorteilhaft, wenn gemäß einer weiteren bevorzugten Ausgestaltung der Erfindung jede der beiden länglichen, parallel zueinander verlaufenden Flächen (Anschlagflächen) mit einem Übergangsradius von weniger als 1,0 mm, vorzugsweise weniger als 0,6 mm in den Boden der Vertiefung übergeht.

Eine weitere vorteilhafte Ausgestaltung der Erfindung ist dadurch gekennzeichnet, dass der umlaufende Randbereich zwei bogenförmige Randabschnitte aufweist, welche in die beiden länglichen, parallel zueinander verlaufenden Flächen übergehen und in einer Schnittebene, die rechtwinklig zur Längsachse des Langlochs verläuft, geschwungene Flanken aufweisen, wobei die jeweilige Flanke einen am Boden der Vertiefung beginnenden konkav gekrümmten Flankenabschnitt und einen sich daran anschließenden, an der Außenumfangslinie des umlaufenden Randbereichs endenden konvex gekrümmten Flankenabschnitt aufweist. Die bogenförmigen Randabschnitte und deren geschwungene Flanken erfordern nur eine relativ geringe Streckung bzw. Stauchung des Grundmaterials beim Formen der Vertiefung und tragen somit erheblich zur Vermeidung einer Rissbildung bei. Vorzugsweise wird die Vertiefung so ausgebildet, dass der konvex gekrümmte Flankenabschnitt eine um mindestens 20%, besonders bevorzugt mindestens 80% längere Bogenlänge aufweist als der konkav gekrümmte Flankenabschnitt. Vorzugsweise wird der Flankenschnitt an den beiden bogenförmigen Randabschnitten so ausgebildet, dass dort der maximale Steigungsgradient des gesamten Flankenschnittes möglichst niedrig ist.

Hinsichtlich einer einfachen Montage und Verstellung der Exzenterscheibe ist es vorteilhaft, wenn gemäß einer weiteren Ausgestaltung der Erfindung der konkav gekrümmte Flankenabschnitt in einem Abstand von der Längsachse des Langlochs beginnt, der größer als die Länge des Langlochs ist.

Nachfolgend wird die Erfindung anhand einer ein Ausführungsbeispiel darstellenden Zeichnung näher erläutert. Es zeigen:
- Fig. 1: einen Abschnitt eines Hinterachsträgers mit einem daran beweglich gelagerten Federlenker in einer perspektivischen Darstellung;

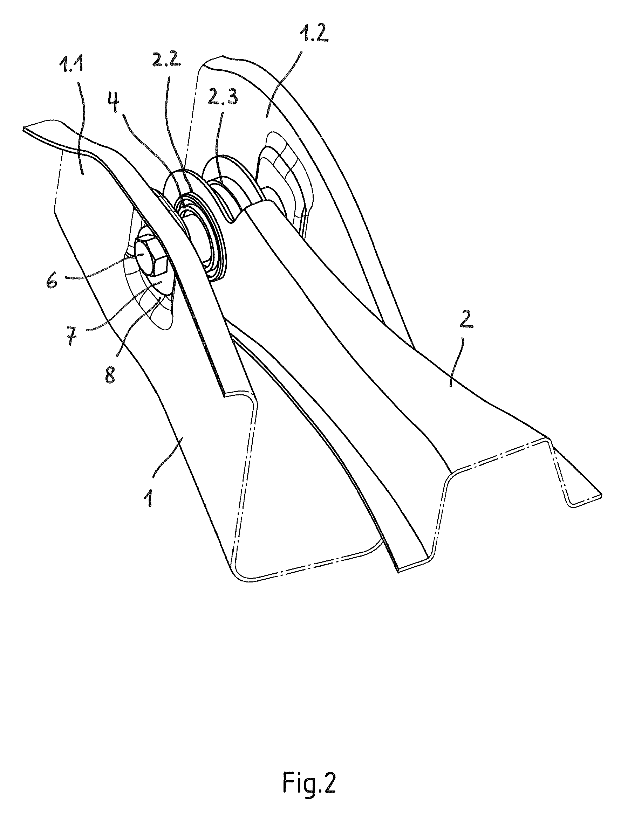

- Fig. 2: den Abschnitt des Hinterachsträgers aus Fig. 1 mit einem Abschnitt des daran beweglich angebundenen Federlenkers in einer gegenüber Fig. 1 vergrößerten perspektivischen Darstellung;
- Fig. 3: einen Ausschnitt des Hinterachsträgers aus Fig. 1 mit einem erfindungsgemäßen Exzenteranschlag ohne Verbindungsbolzen und ohne Exzenterscheibe in einer Vorderansicht;
- Fig. 4: eine Schnittansicht des erfindungsgemäßen Exzenteranschlages entlang der Schnittlinie IV-IV in Fig. 3; und
- Fig. 5: einen Ausschnitt des Hinterachsträgers entsprechend Fig. 3 mit dem erfindungsgemäßen Exzenteranschlag und einem mit einer Exzenterscheibe versehenen Verbindungsbolzen in einer perspektivischen Darstellung.

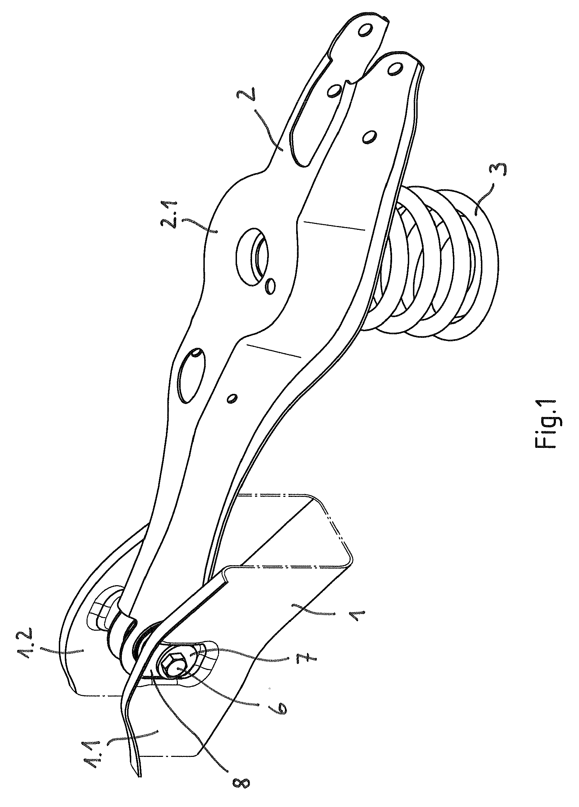

Fig. 1 zeigt einen Abschnitt eines Hinterachsträgers 1, an dem ein Lenkerarm 2 zur Aufhängung eines Fahrzeugrades beweglich gelagert ist. Der Lenkerarm (Querlenker) 2 ist als Federlenker ausgebildet und weist dementsprechend einen durchmessererweiterten Abschnitt 2.1 zur Aufnahme und Abstützung einer Schraubenfeder 3 auf. Der Hinterachsträger 1 besteht aus Metallblech, vorzugsweise Stahlblech, das entsprechend umgeformt wurde. Er ist vorzugsweise aus hochfestem Stahl, insbesondere Mehrphasen- oder Complexphasenstahl gefertigt, der beispielsweise eine Zugfestigkeit von mindestens 800 MPa und eine Streckgrenze von mindestens 680 MPa aufweist. Die Blechdicke des Hinterachsträgers 1 liegt beispielsweise im Bereich von 1,5 bis 3,5 mm, vorzugsweise im Bereich von 1,5 bis 2,5 mm.

Das mit dem Hinterachsträger 1 verbundene Ende des Lenkerarms (Querlenkers) 2 weist zwei miteinander fluchtende Lageraugen 2.2, 2.3 auf, in denen eine Lagerbuchse 4 formschlüssig gehalten ist. Bei der Lagerbuchse 4 handelt es sich vorzugsweise um eine Gummi-Metall-Buchse.

Der Hinterachsträger 1 besitzt zumindest im Bereich der Lenkeranbindung ein im Wesentlichen U-förmiges Querschnittsprofil. Die Ränder seiner Schenkel 1.1, 1.2 sind dabei vorzugsweise nach außen abgekantet. In die Schenkel 1.1, 1.2 sind Durchgangslöcher 5 eingebracht, die miteinander fluchten und in Form von Langlöchern ausgebildet sind. Durch die Langlöcher 5 der Hinterachsträgerschenkel und die dazwischen angeordnete Lagerbuchse 4 des Lenkerarms 2 ist ein Verbindungsbolzen 6 gesteckt. Durch Verstellen, insbesondere Verschieben des Verbindungsbolzens 6 entlang der Längsachse der Langlöcher 5 lässt sich über den Lenkerarm 2 der Sturz des zugeordneten Fahrzeugrades, d.h. die Neigung der Radebene zur Vertikalen, sowie die Spur der Fahrzeugräder einstellen. Hierzu ist der Verbindungsbolzen 6 mit einer Exzenterscheibe 7 versehen, die mit ihm drehstarr verbunden ist. Beispielsweise weist der Verbindungsbolzen 6 eine Längsnut auf (nicht gezeigt), in welche die ringförmige Exzenterscheibe 7 mit einem an ihrer Durchgangsöffnung radial nach innen vorstehenden Vorsprung formschlüssig eingreift.

Als Anschlag für die Exenterscheibe 7 dienen zwei parallel zueinander verlaufende Flächen 8.1, 8.2 einer Vertiefung 8, die in das Grundmaterial (Metallblech) des Hinterachsträgers eingeformt ist. Die Tiefe oder größte Tiefe T der Vertiefung 8 beträgt beispielsweise weniger als das 3,0-fache, vorzugsweise weniger als das 2,8-fache der Dicke d des Grundmaterials.

Ferner wird die Tiefe T der Vertiefung 8 vorzugsweise auch in Abhängigkeit der Dicke der Exzenterscheibe 7 bemessen, so dass die Tiefe T der Vertiefung dann beispielsweise das 0,5-fache bis 1,2-fache der Dicke der Exzenterscheibe 7 beträgt.

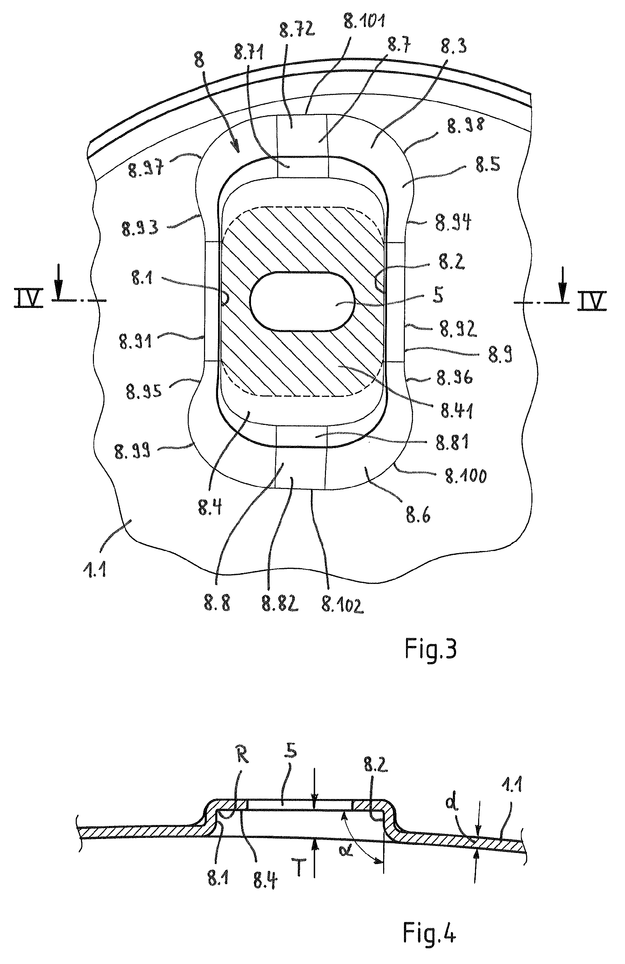

Die Vertiefung 8 definiert einen umlaufenden Randbereich 8.3 und einen von dem Randbereich 8.3 eingefassten Boden 8.4. Das Langloch 5 wird nach dem Einformen der Vertiefung 8 in den Boden 8.4 eingebracht. Der Boden 8.4 ist vorzugsweise im Wesentlichen eben ausgebildet. Die in Fig. 3 schraffiert dargestellte Fläche 8.41 des Bodens 8.4 der Vertiefung ist der Flächenbereich, welcher der mit dem Verbindungsbolzen 6 verbundenen Exzenterscheibe 7 bei der Exzenterverstellung des Verbindungsbolzens 6 als Verstellbereich zur Verfügung steht. Dieser Verstellbereich (Flächenbereich) 8.41 kann auch als Funktionsfläche bezeichnet werden.

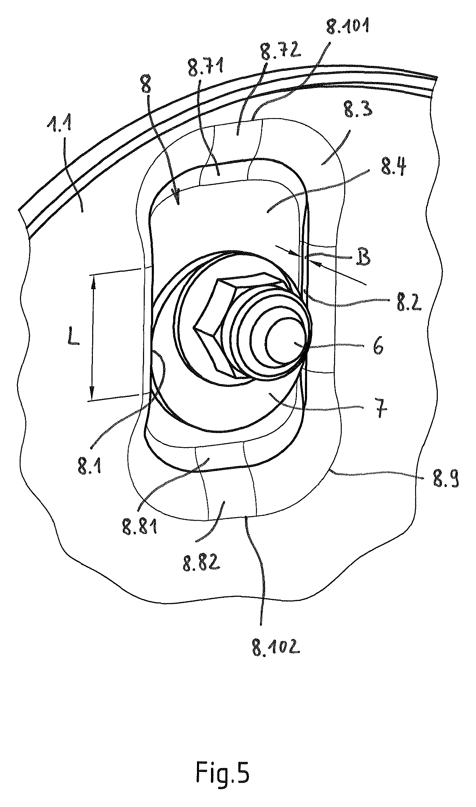

Die beiden länglichen, parallel zueinander verlaufenden Flächen (Anschlagflächen) 8.1, 8.2 schließen mit dem Boden 8.4 einen Winkel α von vorzugsweise ca. 90° ein. Die beiden Flächen 8.1, 8.2 haben jeweils eine nahezu rechteckige Form. Ihre Länge L ist vorzugsweise größer als die Länge des Langlochs 5. Besonders bevorzugt beträgt die Länge L der jeweiligen Fläche (Exzenteranschlagfläche) 8.1, 8.2 mehr als das 1,1-fache der Länge des Langlochs 5 (vgl. Figuren 3 und 5). Insbesondere ist die Länge L der Anschlagflächen 8.1, 8.2 durch den geforderten Verstellweg für die Spur- oder Sturzeinstellung sowie den Durchmesser der Exzenterscheibe bestimmt. Senkrecht zu ihrer Länge L betrachtet erstreckt sich die jeweilige Fläche 8.1, 8.2 über mehr als 10%, vorzugsweise mehr als 20%, besonders bevorzugt mehr als 25% der Tiefe T der Vertiefung 8 (vgl. Fig. 4). Die entsprechende Breite (Tiefe) der Fläche 8.1, 8.2 ist in Fig. 5 mit B bezeichnet.

Der Übergangsradius R, mit dem die Flächen 8.1, 8.2 in den Boden 8.4 der Vertiefung übergehen, kann sehr klein ausgelegt werden. Er beträgt beispielsweise weniger als 1,0 mm, vorzugsweise weniger als 0,6 mm.

Ferner weist der umlaufende Randbereich 8.3 der Vertiefung 8 zwei bogenförmige Randabschnitte 8.5, 8.6 auf, die in die im Wesentlichen geraden, parallel zueinander verlaufenden Flächen 8.1, 8.2 übergehen und in einer Schnittebene, die rechtwinklig zur Längsachse des Langlochs 5 verläuft, geschwungene Flanken 8.7, 8.8 aufweisen. In den Figuren 3 und 5 ist gut zu erkennen, dass die jeweilige Flanke 8.7, 8.8 einen am Boden 8.4 der Vertiefung beginnenden konkav gekrümmten Flankenabschnitt 8.71, 8.81 und einen sich daran anschließenden, an der Außenumfangslinie 8.9 des umlaufenden Randbereichs 8.3 endenden konvex gekrümmten Flankenabschnitt 8.72, 8.82 aufweist. Insbesondere ist zu erkennen, dass die Außenumfangslinie 8.9 der Vertiefung 8 parallel zueinander verlaufende Umfangslinienabschnitte 8.91, 8.92 aufweist, die parallel zu den Flächen 8.1, 8.2 verlaufen. Die Länge dieser im Wesentlichen geraden Umfangslinienabschnitte 8.91, 8.92 entspricht mindestens der Länge L der Flächen 8.1, 8.2. Die Umfangslinienabschnitte 8.91, 8.92 gehen in bogenförmige Umfangslinienabschnitte 8.93, 8.94 über. Letztere verlaufen ausgehend von den geraden Umfangslinienabschnitten 8.91, 8.92 zunächst divergent auseinander und ändern ihre Krümmungsrichtung nach einer Bogenlänge, deren Länge in etwa gleich dem kürzesten Abstand der halbkreisförmigen Lochkante des Langlochs 5 von der geraden Fläche 8.1, 8.2 ist. Die stetig aufeinander zulaufenden bogenförmigen Umfangslinienabschnitte 8.97, 8.98, 8.99, 8.100 treffen sich in einem geraden oder nahezu geraden Umfangslinienabschnitt 8.101 bzw. 8.102, der im Wesentlichen rechtwinklig zu den geraden Umfangslinienabschnitten 8.91, 8.92 bzw. parallel zur Längsachse des Langlochs 5 verläuft. Gegenüber dem Abstand zwischen den geraden Flächen 8.1, 8.2 bzw. geraden Umfangslinienabschnitten 8.91, 8.92 weist die Vertiefung 8 somit zwei Abstandserweiterungen (Innendurchmessererweiterungen) an den bogenförmigen Randabschnitten 8.5, 8.6 auf.

Der konvex gekrümmte Flankenabschnitt 8.72, 8.82 besitzt eine deutlich größere Bogenlänge als der konkav gekrümmte Flankenabschnitt 8.71, 8.81. In den Figuren 3 und 5 ist zu erkennen, dass der an der Außenumfangslinie 8.9 endende konvex gekrümmte Flankenabschnitt 8.72, 8.82 eine um mehr als ca. 80% längere Bogenlänge aufweist als der am Boden 8.4 der Vertiefung beginnende konkav gekrümmte Flankenabschnitt 8.71, 8.81 aufweist. Des Weiteren ist zu erkennen, dass der konkav gekrümmte Flankenabschnitt 8.71, 8.81 in einem Abstand von der Längsachse des Langlochs 5 beginnt, der größer als die Länge des Langlochs 5 ist. Der Abstand des konkav gekrümmten Flankenabschnitts 8.71 oder 8.81 von dem Verstellbereich 8.41 (Funktionsfläche) beträgt ungefähr die Hälfte des kleinsten Durchmessers (oder der Breite) des Langlochs 5.

Es versteht sich, dass die Anwendung der Erfindung nicht auf Hinterachsträger beschränkt ist. Vielmehr ist sie ebenso bei Vorderachsträgern anwendbar.

## Patentansprüche

1. Fahrwerksbauteil mit einer aus formbarem Grundmaterial, vorzugsweise Stahlblech, hergestellten Halterung, die mindestens ein Langloch (5) zur Aufnahme eines Verbindungsbolzens (6) zur Anbindung eines Lenkerarms (2) und mindestens einen Anschlag für eine mit dem Verbindungsbolzen drehstarr verbundene oder drehstarr verbindbare Exzenterscheibe (7) aufweist, **dadurch gekennzeichnet, dass** in das Grundmaterial eine Vertiefung (8) eingeformt ist, die einen umlaufenden Randbereich (8.3) und einen von dem Randbereich eingefassten Boden (8.4) definiert, wobei der Boden (8.4) das Langloch (5) aufweist und der Randbereich zwei längliche, parallel zueinander verlaufende Flächen (8.1, 8.2) aufweist, die als Anschlag für die Exzenterscheibe (7) dienen können.

2. Fahrwerksbauteil nach Anspruch 1, **dadurch gekennzeichnet, dass** jede der beiden länglichen, parallel zueinander verlaufenden Flächen (8.1, 8.2) mit dem Boden (8.4) einen Winkel (α) im Bereich von 90° bis 120° einschließt.

3. Fahrwerksbauteil nach Anspruch 1 oder 2, **dadurch gekennzeichnet, dass** sich jede der beiden länglichen, parallel zueinander verlaufenden Flächen (8.1, 8.2) über mindestens 10%, vorzugsweise mindestens 20%, besonders bevorzugt mindestens 25% der Tiefe (T) der Vertiefung (8) erstreckt.

4. Fahrwerksbauteil nach einem der Ansprüche 1 bis 3, **dadurch gekennzeichnet, dass** die größte Tiefe (T) der Vertiefung (8) weniger als das 3,0-fache, vorzugsweise weniger als das 2,8-fache der Dicke (d) des Grundmaterials beträgt.

5. Fahrwerksbauteil nach einem der Ansprüche 1 bis 4, **dadurch gekennzeichnet, dass** jede der beiden länglichen, parallel zueinander verlaufenden Flächen (8.1, 8.2) eine Länge (L) aufweist, die mindestens das 0,8-fache, vorzugsweise mindestens das 1,1-fache der Länge des Langlochs (5) beträgt.

6. Fahrwerksbauteil nach einem der Ansprüche 1 bis 5, **dadurch gekennzeichnet, dass** jede der beiden länglichen, parallel zueinander verlaufenden Flächen (8.1, 8.2) mit einem Übergangsradius (R) von weniger als 1,0 mm, vorzugsweise weniger als 0,6 mm in den Boden (8.4) der Vertiefung (8) übergeht.

7. Fahrwerksbauteil nach einem der Ansprüche 1 bis 6, **dadurch gekennzeichnet, dass** der umlaufende Randbereich (8.3) zwei bogenförmige Randabschnitte (8.5, 8.6) aufweist, welche in die beiden länglichen, parallel zueinander verlaufenden Flächen (8.1, 8.2) übergehen und in einer Schnittebene, die rechtwinklig zur Längsachse des Langlochs (5) verläuft, geschwungene Flanken (8.7, 8.8) aufweisen, wobei die jeweilige Flanke (8.7, 8.8) einen am Boden (8.4) der Vertiefung (8) beginnenden konkav gekrümmten Flankenabschnitt (8.71, 8.81) und einen sich daran anschließenden, an der Außenumfangslinie (8.9) des umlaufenden Randbereichs (8.3) endenden konvex gekrümmten Flankenabschnitt (8.72, 8.82) aufweist.

8. Fahrwerksbauteil nach Anspruch 7, **dadurch gekennzeichnet, dass** der konvex gekrümmte Flankenabschnitt (8.72, 8.82) eine um mindestens 20% längere Bogenlänge aufweist als der konkav gekrümmte Flankenabschnitt (8.71, 8.81).

9. Fahrwerksbauteil nach Anspruch 7 oder 8, **dadurch gekennzeichnet, dass** der konkav gekrümmte Flankenabschnitt (8.71, 8.81) in einem Abstand von der Längsachse des Langlochs (5) beginnt, der größer als die Länge des Langlochs (5) ist.

## Claims

1. Chassis component having a mount which is produced from a formable basic material, preferably sheet steel, and comprises at least one slot (5) for receiving a connection bolt (6) for attaching a link arm (2), and at least one stop for an eccentric disc (7) which is or can be connected in a torsionally stiff sense to the connection bolt, **characterised in that** a recess (8) is moulded into the basic material and defines a peripheral edge region (8.3) and a base (8.4) enclosed by the edge region, the base (8.4) comprising the slot (5) and the edge region comprising two oblong surfaces (8.1, 8.2) which extend in parallel with one another and can act as the stop for the eccentric disc (7).

2. Chassis component according to claim 1, **characterised in that** each of the two oblong surfaces (8.1, 8.2), which extend in parallel with one another, enclose an angle (α) with the base (8.4) which is in the range of from 90° to 120°.

3. Chassis component according to either claim 1 or claim 2, **characterised in that** each of the two oblong surfaces (8.1, 8.2), extending in parallel with one another, extend over at least 10 %, preferably at least 20 %, more preferably at least 25 % of the depth (T) of the recess (8).

4. Chassis component according to any of claims 1 to 3, **characterised in that** the greatest depth (T) of the recess (8) is less than 3.0 times, preferably less than 2.8 times, the thickness (d) of the basic material.

5. Chassis component according to any of claims 1 to 4, **characterised in that** each of the two oblong surfaces (8.1, 8.2), extending in parallel with one another, has a length (L) which is at least 0.8 times, preferably at least 1.1 times, the length of the slot (5).

6. Chassis component according to any of claims 1 to 5, **characterised in that** each of the two oblong surfaces (8.1, 8.2) extending in parallel with one another transitions into the base (8.4) of the recess (8) with a transition radius (R) of less than 1.0 mm, preferably less than 0.6 mm.

7. Chassis component according to any of claims 1 to 6, **characterised in that** the peripheral edge region (8.3) comprises two arcuate edge regions (8.5, 8.6) which transition into the two oblong surfaces (8.1,8.2) extending in parallel with one another and comprise curved flanks (8.7, 8.8) in a sectional plane extending perpendicularly to the longitudinal axis of the slot (5), each of the flanks (8.7, 8.8) comprising a concave flank portion (8.71, 8.81) beginning at the base (8.4) of the recess (8) and a convex flank portion (8.72, 8.82) connected thereto and ending at the outer peripheral line (8.9) of the peripheral edge region (8.3).

8. Chassis component according to claim 7, **characterised in that** the convex flank portion (8.72, 8.82) has a curve length which is at least 20 % longer than that of the concave flank portion (8.71,8.81).

9. Chassis component according to either claim 7 or claim 8, **characterised in that** the concave flank portion (8.71, 8.81) begins at a distance from the longitudinal axis of the slot (5) which is greater than the length of the slot (5).

## Revendications

1. Composant de châssis, avec un support en un matériau de base façonnable, de préférence en acier, qui est doté d'au moins un trou oblong (5), destiné à la réception d'un boulon de liaison (6) pour le raccordement d'un bras de guidage (2), et au moins une butée pour un disque d'excentrique (7), qui est relié ou peut être relié au boulon de liaison, solidaire en rotation, **caractérisé en ce que**, dans le matériau de base, est formée une cavité (8), qui définit une zone marginale, continue (8.3) et un fond (8.4), qui est encadré par la zone marginale, sachant que le fond (8.4) est doté du trou oblong (5) et que la zone marginale est dotée de deux surfaces allongées (8.1, 8.2), qui, s'étendant parallèlement l'une à l'autre, peuvent servir de butée pour le disque d'excentrique (7).

2. Composant de châssis selon la revendication 1, **caractérisé en ce que** chacune des deux surfaces allongées (8.1, 8.2), qui s'étendent parallèlement l'une à l'autre, forme avec le fond (8.4) un angle (α) compris dans la plage de 90° à 120°.

3. Composant de châssis selon revendication 1 ou 2, **caractérisé en ce que** chacune des deux surfaces allongées (8.1, 8.2), qui s'étendent parallèlement l'une à l'autre, s'étend sur une profondeur d'au moins 10%, de préférence d'au moins 20%, en particulier d'au moins 25% de la profondeur (T) de la cavité (8).

4. Composant de châssis selon l'une des revendications 1 à 3, **caractérisé en ce que** la plus grande profondeur (T) de la cavité (8) est inférieure à 3 fois, de préférence inférieure à 2,8 fois l'épaisseur (d) du matériau de base.

5. Composant de châssis selon l'une des revendications 1 à 4, **caractérisé en ce que** chacune des deux surfaces allongées (8.1, 8.2), qui s'étendent parallèlement l'une à l'autre, est dotée d'une longueur (L) d'au moins 0,8 fois, de préférence d'au moins 1,1 fois la longueur du trou oblong (5).

6. Composant de châssis selon l'une des revendications 1 à 5, **caractérisé en ce que** chacune des deux surfaces allongées (8.1, 8.2), qui s'étendent parallèlement l'une à l'autre, se raccorde au fond (8.4) de la cavité (8) avec un rayon de transition (R) qui est inférieur à 1,0 mm, de préférence inférieur à 0,6 mm.

7. Composant de châssis selon l'une des revendications 1 à 6, **caractérisé en ce que** la zone marginale, continue (8.3) est dotée de deux sections marginales en forme d'arc (8.5, 8.6) qui se raccordent aux deux surfaces allongées (8.1, 8.2), qui s'étendent parallèlement l'une à l'autre, et qui sont dotées de flancs (8.7, 8.8) sur un plan de coupe qui forme un angle droit par rapport à l'axe longitudinal du trou oblong (5), sachant que les flancs (8.7, 8.8) sont dotés chacun d'une section de flanc concave (8.71, 8.81), qui commence sur le fond (8.4) de la cavité (8), et une section de flanc convexe (8.72, 8.82), qui, se raccordant à celles-ci, se termine sur la ligne périphérique, extérieure (8.9) de la zone marginale, continue (8.3).

8. Composant de châssis selon la revendication 7, **caractérisé en ce que** la section de flanc convexe (8.72, 8.82) est dotée d'une longueur d'arc qui est d'au moins 20% supérieure à celle de la section de flanc concave (8.71, 8.81).

9. Composant de châssis selon revendication 7 ou 8, **caractérisé en ce que** la section de flanc concave (8.71, 8.81) commence à une distance de l'axe longitudinal du trou oblong (5) qui est plus grande que la longueur dudit trou oblong (5).
